# EUROPEAN PATENT SPECIFICATION

(11) **EP 3 967 584 B1**
(45) Date of publication and mention of the grant of the patent: **04.09.2024**
(21) Application number: 21206445.5
(22) Date of filing: 26.07.2018
(51) Int. Cl.: B62K 11/04, B62J 6/02, B62J 6/04, G01S 13/93, G08G 1/16, B62J 45/41, B62J 45/42, B62J 6/022, B62J 45/412, G01S 13/931, H01Q 1/32, H01Q 1/42, B62J 17/00, B62J 99/00

(54) **MOTORCYCLE**
MOTORRAD
MOTOCYCLETTE

(30) Priority: 11.09.2017 JP 2017173673
(43) Date of publication of application: 16.03.2022
(62) Divisional of application: 18185784.8
(73) Proprietor: KAWASAKI MOTORS, LTD., Akashi-shi, Hyogo 673-8666 (JP)
(72) Inventor: KATO, Hideyuki, Kobe, 6508670 (JP)
(74) Representative: Wenzel Nemetzade Warthmüller Patentanwälte Part mbB

(56) References cited:
- WO-A1-2016/010689
- DE-A1- 102014 213 392
- DE-A1- 102015 220 312
- JP-A- 2009 204 592
- JP-A- 2017 039 487
- JP-A- 2017 091 138

## Description

### TECHNICAL FIELD

The present invention mainly relates to a motorcycle with a rear radar device.

### BACKGROUND ART

Patent Document 1 (Japanese Patent Application Laid-Open No. 2008-110683) discloses a motorcycle with a configuration in which a radar device is arranged in the vicinity of a front fender.

The radar device detects a distance to a front obstacle and a direction where the obstacle exists.

JP 2017 091138 A and JP 2009 204592 A are also state of the art.

JP 2017 091138 A discloses the following features of claim 1 a motorcycle comprising:a headlight including a part of material that shields an electromagnetic wave;a taillight including a part of material that shields the electromagnetic wave; anda rear radar device that transmits a transmission wave, which is the electromagnetic wave for detecting the surroundings, rearward from a transmission/reception portion, and receives a reflected wave that is reflected by an object at the transmission/reception portion, whereinthe transmission/reception portion of the rear radar device is covered by a member with the material that transmits the electromagnetic wave, at least in a range where the transmission wave is transmitted,the rear radar device for transmitting the transmission wave rearward is arranged, and in a rear view, the radar device is arranged outside a rear projection area of the taillight, the motorcycle includes a rear frame, the position of the rear radar device in the vertical direction overlaps the rear frame, the rear radar device is arranged rearward of the rear frame,in the rear view, the transmission/ reception portion of the rear radar device is arranged below the taillight, the rear radar device in the vertical direction is positioned below the taillight, and its position overlaps the rear frame,the transmission/reception portion of the rear radar device is arranged forward of the taillight, the rear radar device (50) is positioned above the rear fender (23), wherein the transmission wave that is transmitted by the rear radar device (50) has the range in the vertical direction.

### SUMMARY OF THE INVENTION

### PROBLEMS TO BE SOLVED BY THE INVENTION

However, a radar device of Patent Document 1 is arranged so as to be exposed outward. Therefore, there is a possibility that water, mud and the like may be splashed on the radar device. Depending on a transmission range of an electromagnetic wave of the radar device, there is a possibility that the electromagnetic wave is partly obstructed by a front wheel, etc.

The present invention has been made in view of the circumstances described above. The primary object of the present invention is to provide a motorcycle with a configuration in which a transmission/reception range of an electromagnetic wave of a rear radar device is sufficiently secured, and the configuration in which water, mud and the like are less likely to be splashed on the radar device.

### MEANS FOR SOLVING THE PROBLEMS

Problems to be solved by the present invention are as described above, and next, means for solving the problems and effects thereof will be described.

In an aspect of the present invention, a motorcycle with the features of appended claim 1 solves the problems described.

Accordingly, the rear radar device is covered by the member with the material that transmits the electromagnetic wave, which can protect the rear radar device from water, mud and the like without degrading the function of the rear radar device. A part of material that shields the electromagnetic wave of the headlight and the taillight can prevent the transmission wave of the rear radar device from being affected.

### EFFECT OF THE INVENTION

According to the present invention, a motorcycle with a configuration in which a transmission/reception range of an electromagnetic wave of a rear radar device is sufficiently secured, and the configuration in which water, mud and the like are less likely splashed on the rear radar device can be provided.

### BRIEF DESCRIPTION OF THE DRAWINGS

[Fig. 1] A side view of a motorcycle according to one embodiment of the present invention.
[Fig. 2] A front view of the motorcycle.
[Fig. 3] A plan view of the motorcycle.
[Fig. 4] An enlarged side view of a front part of the motorcycle.
[Fig. 5] An enlarged side view of a rear part of the motorcycle.

### EMBODIMENT FOR CARRYING OUT THE INVENTION

Next, an embodiment of the present invention will be described with reference to the drawings. In the following description, front-back and left-right directions are defined that a forwarding direction of a motorcycle 1 is a front direction (that is, the left-right direction is defined in the direction seen from a driver who got on the motorcycle 1). An upper side and a lower side in a vertical direction are defined as the upper side and the lower side. The terms describing a positional relationship, size, or shape etc. include not only a state in which the meaning of the term is completely satisfied but also a state in which the meaning of the term is substantially satisfied. When it is described that A is mounted to B, its configuration includes not only a configuration in which A is directly mounted to B but also the configuration in which A is mounted to B through another mounting member or the like.

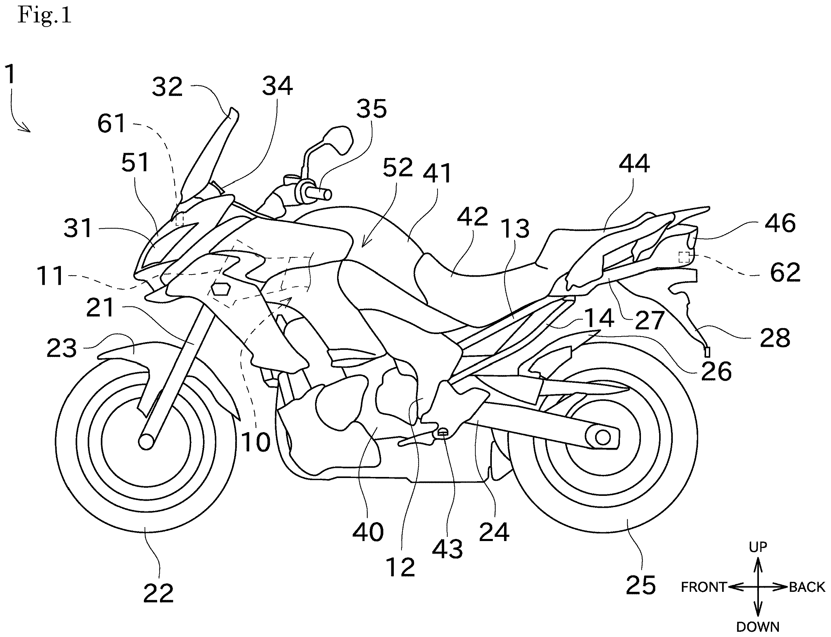

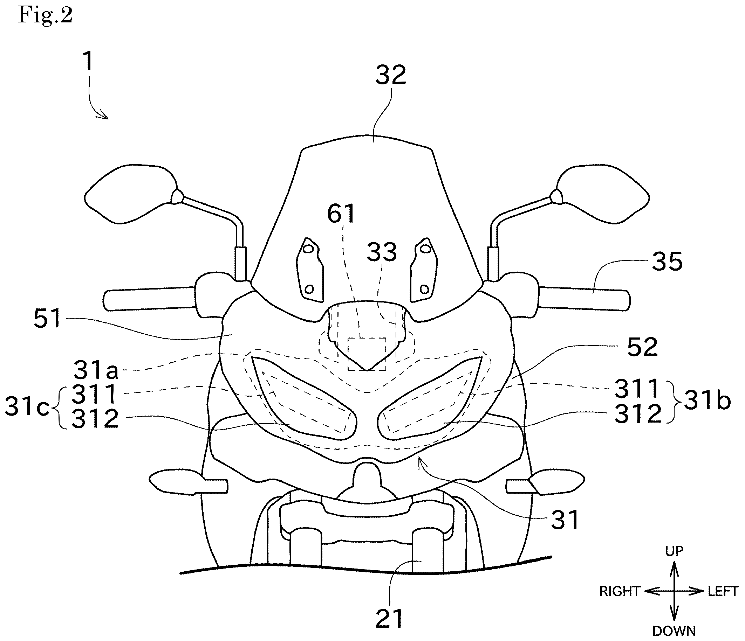

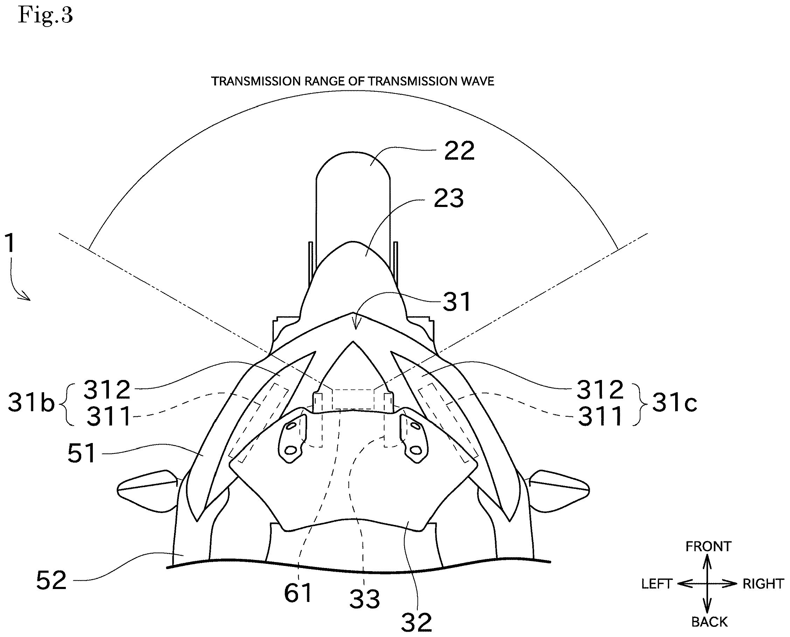

Firstly, an overview of the motorcycle 1 will be described with reference to Fig. 1 to Fig. 3. Fig. 1 is a side view of the motorcycle 1. Fig. 2 is a front view (a drawing viewed in the front) of the motorcycle 1. Fig. 3 is a plan view of the motorcycle. As shown in Fig. 1, the motorcycle 1 includes an engine 40, a front wheel 22, and a rear wheel 25. These members are supported by a body frame 10. Since the body frame 10 is made of metal, eh body frame 10 has the property of shielding an electromagnetic wave. The body frame 10 includes a head pipe frame 11, a main frame 12, a rear frame 13, and a rear stay 14.

When the specification herein describes "a material that shields the electromagnetic wave" or the like, such material includes not only the material that completely shields the electromagnetic wave but also the material that shields the electromagnetic wave to such an extent that there is an adverse influence on a processing using the electromagnetic wave (a detection processing of the surroundings). Similarly, when the specification herein describes "a material that transmits the electromagnetic wave" or the like, such material includes not only the material that completely transmits the electromagnetic wave but also the material that transmits the electromagnetic wave to such an extent that there is little influence on the processing using the electromagnetic wave (the detection processing of the surroundings).

The head pipe frame 11 has a shaft insertion hole for receiving a steering shaft (not shown). An upper bracket and a lower bracket (not shown) are mounted to an upper part and a lower part of the head pipe frame 11 respectively. Each of the upper bracket and the lower bracket has a fork insertion hole for receiving a front fork 21 arranged in pairs on the left and right. With this configuration, the upper bracket and the lower bracket support the front fork 21. A front wheel 22 is rotatably mounted to the lower part of the front fork 21. A front fender 23 is arranged in the upper part of the front wheel 22.

The main frame 12 is connected to the head pipe frame 11. The main frame 12 is arranged in pairs on the left and right. The main frame 12 extends rearward and obliquely downward from a rear part of the head pipe frame 11, and then extends downward. A front part and a rear part of the main frame 12 may be configured from members different from each other. The rear frame 13 and the rear stay 14 in pairs on the left and right are respectively mounted at a middle part of the main frame 12. The rear frame 13 is arranged above the rear stay 14. The rear frame 13 and the rear stay 14 are arranged so as to extend rearward and obliquely upward from the main frame 12.

A swing arm 24 is mounted to the rear part of the main frame 12. A front end of the swing arm 24 is elastically supported by a rear suspension (not shown). The swing arm 24 is arranged so as to extend rearward as shown in Fig. 1. A rear wheel 25 is rotatably mounted to a rear part of the swing arm 24. The power that is generated in the engine 40 is transmitted to the rear wheel 25 via a drive chain (not shown). A rear fender 26 is arranged in the upper part of the rear wheel 25 (near the rear wheel 25). As with the swing arm 24, the rear fender 26 is elastically supported by the rear suspension. When the swing arm 24 and the rear wheel 25 swing, the rear fender 26 swings integrally therewith.

A rear frame cover 27 and a rear flap 28 are further arranged above the rear wheel 25. The rear frame cover 27 and the rear flap 28 are supported by the body frame 10 (the rear frame 13, the rear stay 14). Even when the swing arm 24 and the rear wheel 25 swing, the rear frame cover 27 and the rear flap 28 do not swing integrally therewith. Since the rear frame cover 27 and the rear flap 28 are made of resin, they have a property of transmitting the electromagnetic wave.

The rear frame cover 27 covers the periphery of the rear frame 13 and the rear stay 14 (particularly their rear parts). The rear frame cover 27 is arranged below a rear seat 44 which will be described later. The rear flap 28 is a member for extending rearward and obliquely downward from a lower part of the rear frame cover 27 (extending along an outer peripheral surface of the rear wheel 25). A reflector which reflects the light irradiated from the rear and a license plate etc., are mounted to the rear flap 28.

As shown in Fig. 1, a headlight 31 is arranged above the front wheel 22 and in a front part of the motorcycle 1. Since the headlight 31 includes a plurality of metal parts in arbitrary positions, the headlight 31 has the property of shielding the electromagnetic wave. As shown in Fig. 2, the headlight 31 includes a case part 31a, a left headlight part 31b, and a right headlight part 31c. As such, since the headlight 31 has a configuration in which a light irradiation part is separated to the left and right, the headlight 31 has an area where the light is not irradiated between the left headlight part 31b and the right head light part 31c.

The case part 31a is supported by the body frame 10 via a mounting bracket (mounting part, not shown). The left headlight part 31b and the right headlight part 31c are mounted to the case part 31a.

The left headlight part 31b and the right headlight part 31c are symmetrical with respect to a line passing through the center of the motorcycle 1 as a symmetry line, in a front view (Fig. 2) and a plan view (Fig. 3). In the front view, each upper part (upper side) of the left headlight part 31b and the right headlight part 31c is configured to approach outward in the left-right direction (that is, so as to have a large space therebetween) as approaching upward. Each outer end (end side) in the left-right direction of the left headlight part 31b and the right headlight part 31c is inclined so as to approach outward in the left-right direction as approaching upward. Accordingly, in the case part 31a, its center in the left-right direction is recessed downward. In the plan view, the left headlight part 31b and the right headlight part 31c are configured to approach outward in the left-right direction (that is, so as to have a large space therebetween) as approaching rearward.

Each of the left headlight part 31b and the right headlight part 31c has an illuminant (not shown), a reflector 311, and a cover 312. The illuminant is a device, such as an incandescent lamp, a halogen bulb, a HID (High-Intensity Discharge) lamp, LED (Light Emitting Diode), etc. which emit the light by using the power. The reflector 311 is formed of a plurality of reflecting plates arranged at various angles, and irradiates the light in a predetermined direction and a predetermined range, by reflecting the light emitted by the illuminant. The cover 312 is arranged on a surface of the motorcycle 1. The cover 312 protects the illuminant and the reflector 311. The cover 312 is a transparent member (lens) that transmits the light. The light reflected by the reflector 311 passes through the cover 312 and goes forward.

A wind shield 32 is arranged above a rear part of the headlight 31. The wind shield 32 guides a running wind, which can prevent the driver from receiving the running wind. Therefore, the wind shield 32 is arranged so as to extend rearward and obliquely upward from a lower end (proximal end). A shield stay 33 is fixed to a lower end of the wind shield 32. The shield stay 33 is supported by the body frame 10 via the mounting bracket similar to headlight 31.

A meter device 34 capable of displaying a vehicle speed, an engine speed, and a warning information etc. is arranged rearward of the wind shield 32. A steering handle 35 is arranged further rearward of the meter device 34. The steering handle 35 is rotated by the driver, which makes the front fork 21 to be rotated. Thereby, the motorcycle 1 can be turned.

A fuel tank 41 for storing fuel to be supplied to the engine 40 is arranged rearward of the steering handle 35, and above the engine 40. A front seat 42 for being sat by the driver is arranged rearward of the fuel tank 41. A front step 43 for placing foot of the driver who sits on the front seat 42 is arranged below the front seat 42. The driver sits on the front seat 42, sandwiches the fuel tank 41 and its lower part with one's own legs, and puts one's own foot on the front step 43. Thereby, steering is partly performed by moving the center of gravity from side to side, while stabilizing the driver's body.

A rear seat 44 for being sat by a passenger is arranged rearward of the front seat 42. The rear seat 44 is arranged above the above-described rear frame cover 27. A taillight 46 is arranged rearward of the rear frame cover 27. Since the taillight 46 includes a plurality of metal parts in arbitrary positions, the taillight 46 has the property of shielding the electromagnetic wave.

The motorcycle 1 includes a front cowl 51 and a side cowl 52, as shown in Fig. 1. The front cowl 51 is arranged mainly in a front vehicle body, specifically, in a portion for covering the periphery of the headlight 31 and the proximal end of the wind shield 32, etc. The side cowl 52 is arranged mainly in a side vehicle body, specifically, arranged below the steering handle 35 and below the fuel tank 41, etc., as shown in Fig. 1. Since the front cowl 51 and the side cowl 52 of this embodiment are made of resin, they have the property of transmitting the electromagnetic wave.

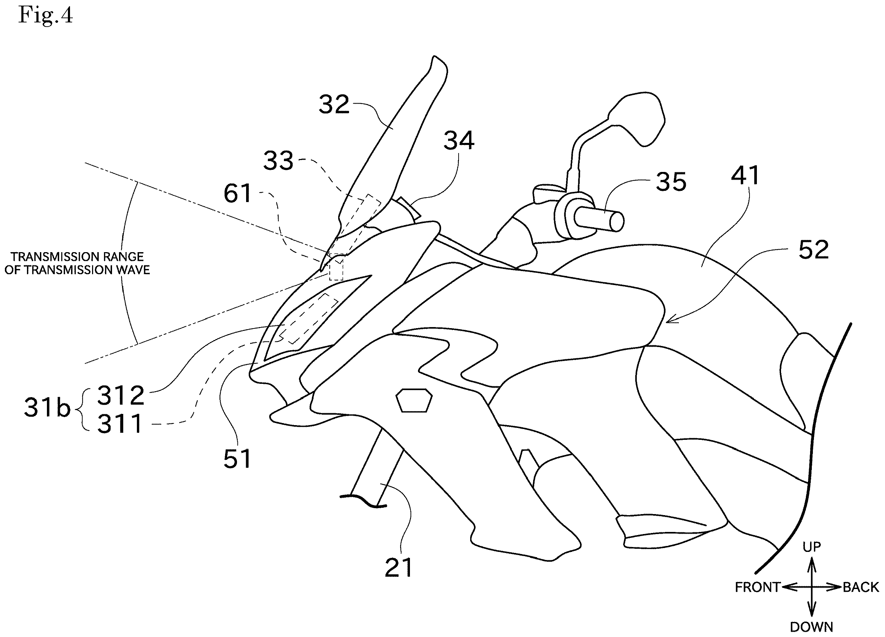

As shown in Fig. 1 to Fig. 3, a front radar device 61 is arranged near the headlight 31, in a portion covered by the front cowl 51. As shown in Fig. 1, a rear radar device 62 is arranged near the taillight 46, in a portion covered by the rear frame cover 27. The front radar device 61 and the rear radar device 62 irradiate a transmission wave (electromagnetic wave) and receive a reflected wave (electromagnetic wave) in which the transmission wave is reflected on the object. The front radar device 61 sends the transmission wave forward. Specifically, the front radar device 61 has a range in the left-right direction as shown in Fig. 3, and transmits the transmission wave having a range in the vertical direction forward, as shown in Fig. 4. The rear radar device 62 transmits the transmission wave rearward. The transmission wave transmitted by the rear radar device 62 has the range in the left-right direction and the range in the vertical direction, as with the front radar device 61.

The front radar device 61 and the rear radar device 62 have an arithmetic unit for analyzing information regarding the received reflected wave, respectively. The arithmetic unit calculates a distance to the object, based on a time from transmission of the transmission wave to reception of the reflected wave. The arithmetic unit calculates a direction of the object, based on the direction where the reflected wave is received. As described above, the arithmetic unit calculates a position of the object existing in front of or in the rear of the motorcycle 1. The arithmetic unit can also calculate a relative speed of the object with respect to the motorcycle 1, based on a change in the distance to the object. The front radar device 61 and the rear radar device 62 send the position of the calculated object to the meter device 34 and an engine control unit, etc. The reflected wave may be analyzed by the arithmetic unit such as the meter device 34 and the engine control unit, etc., not by the front radar device 61 and the rear radar device 62.

The meter device 34 displays the surrounding objects detected by the front radar device 61 and the rear radar device 62. For example, when the distance to the front or rear objects is equal to or less than a predetermined distance, a warning can be given to the meter device 34. When the distance to the front object is equal to or less than the predetermined distance, in addition to the warning or instead of the warning, the engine control unit can control to reduce the vehicle speed by operating the brake. The information of the objects on the outer side in the left-right direction and the objects in the rear part (the presence or absence and the speed of the object) is displayed on the meter device 34, which can assist a safety confirmation in a lane change.

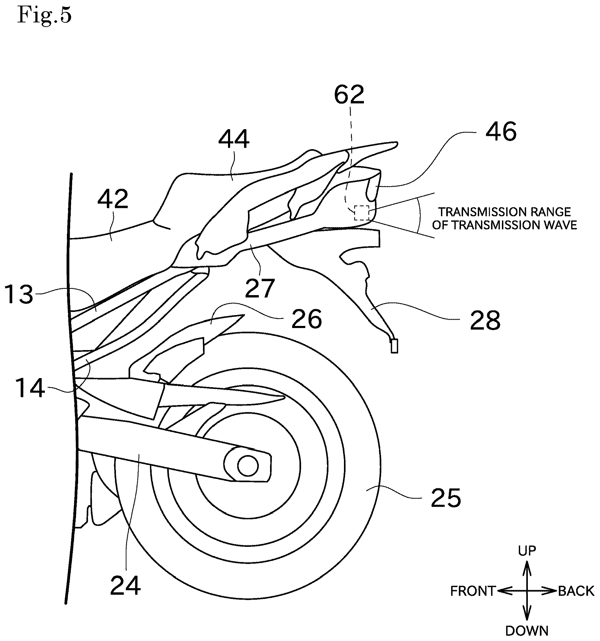

Here, metal parts are used in the motorcycle 1 at various positions. However, the transmission wave that is transmitted by the front radar device 61 and the rear radar device 62, and the reflected wave that is received by them cannot pass through a member which shields the electromagnetic wave such as metal (or the amplitude extremely decreases). In particular, in this embodiment, since the transmission wave having the range in the left-right direction and in the vertical direction is transmitted, the transmission wave is likely to be shielded. Therefore, it is necessary to arrange the front radar device 61 and the rear radar device 62 at appropriate positions. In the following, an arrangement of the front radar device 61 and the rear radar device 62 and their surrounding configurations will be further specifically described with reference to Fig. 4 and Fig. 5.

The front radar device 61 is provided with a transmission/reception portion for transmitting the transmission wave and receiving the reflected wave. Specifically, as shown in Fig. 4, a portion in a front surface of the front radar device 61 excluding its upper part is the transmission/reception part. As shown in Fig. 1, a position of the front radar device 61 in the front-back direction is arranged rearward of a front end of the headlight 31, rearward of an axle of the front wheel 22 (that is, a lower end of the front fork), overlaps the shield stay 33 and the headlight 31, forward of the center of the wind shield 32, and forward of the meter device 34.

As described above, since it is not preferable that the metal parts are arranged in front of the front radar device 61, it is preferable that the front radar device 61 is arranged forward as far as possible. However, as shown in Fig. 4, since the upper surface of the front cowl 51 of this embodiment is inclined so as to approach downward as approaching the front, a space for arranging the parts is small in the vicinity of the front end of the front cowl 51. Furthermore, since the headlight 31 including the metal parts is arranged in the vicinity of the front end of the front cowl 51, it is difficult to arrange the front radar device 61.

Therefore, as described above, the front radar device 61 is arranged in a portion slightly rearward from the front end. The front cowl 51 has a front protruding shape (specifically, a shape in which the size in the vertical direction and the left-right direction decreases as approaching the front). Therefore, since there is a space between the meter device 34 and the front end of the front cowl 51, this space can be utilized to arrange the front radar device 61. In particular, in this embodiment, harnesses connected to the headlight 31 and the meter device 34 are arranged forward of the meter device 34. Therefore, the harness connected to the front radar device 61 can be easily arranged together with these harnesses. The harness connected to the front radar device 61 may be connected to its lower part, its upper part, or its rear part.

The front radar device 61 in the left-right direction is positioned in the center of the motorcycle 1 in the left-right direction. In other words, as shown in Fig. 2 and the like, the front radar device 61 is arranged between the front forks 21 arranged in pairs on the left and right, between the left headlight part 31b and the right headlight part 31c, in the center of the case part 31a in the left-right direction, and between the shield stays 33 arranged in pairs on the left and right. The front radar device 61 is arranged in the center in the left-right direction, which can evenly detect both left and right sides.

As shown in Fig. 1 and the like, the front radar device 61 in the vertical direction is positioned above the front wheel 22 and the front fender 23, overlaps the headlight 31 (specifically, positioned above the reflector 311 and the cover 312, but overlaps the case part 31a), overlaps the shield stay 33, overlaps the fuel tank 41, and positioned below the meter device 34. Although the position of the front radar device 61 in the vertical direction overlaps the headlight 31 (the case part 31a), the front radar device 61 is arranged in a portion where the center of the case part 31a in the left-right direction is recessed downward. Therefore, in a front view, the front radar device 61 and the headlight 31 are not overlapped with each other. Since the front radar device 61 is arranged so as to be sandwiched between the shield stays 33 in pairs on the left and right, the positions of the front radar device 61 and the shield stay 33 can be approached to each other. Therefore, the shield stay 33 and front radar device 61 are easily mounted to a common mounting bracket. The space surrounded by the shield stays 33 in pairs on the left and right can be effectively utilized.

As described above, the headlight 31 is configured such that the space between the left headlight part 31b and the right headlight part 31c increases as approaching rearward, in the plan view (Fig. 3). The front radar device 61 is arranged between the left headlight part 31b and the right headlight part 31c, in the plan view. As described above, since the front radar device 61 is arranged above the left headlight part 31b and the right headlight part 31c, the front radar device 61 is not covered by the left headlight part 31b and the right headlight part 31c. However, for example, the harness of the front radar device 61 may pass through an area surrounded by the left headlight part 31b and the right headlight part 31c, the mounting bracket for mounting the front radar device 61 may be positioned on such area, or a portion of the front radar device 61 other than the transmission/reception portion thereof may be positioned on such area.

As such, the front radar device 61 is arranged at a position avoiding the headlight 31 including the metal parts. Therefore, in the front view (frontal view), the front radar device 61 is arranged at a position deviated from the area where the headlight 31 is projected to the front side (hereinafter referred to as the front projection area of the headlight 31). In this embodiment, although the entire front radar device 61 is arranged at a position deviated from the front projection area of the headlight 31, the transmission/reception portion of the front radar device 61 for transmitting and receiving the electromagnetic wave is merely deviated from the front projection area of the headlight 31. In this embodiment, although the transmission wave to be transmitted has the range in the vertical direction and the left-right direction, the front radar device 61 is arranged such that the headlight 31 does not receive the transmission wave that is transmitted in all ranges (except for weak electromagnetic wave that is not used for detecting the object). Accordingly, the electromagnetic wave that is transmitted and received by the front radar device 61 is not shielded by the headlight 31.

The front radar device 61 is arranged inside the front cowl 51. Specifically, the front cowl 51 covers the outside of the front radar device 61 in the left-right direction (in other words, in the side view, the front cowl 51 overlaps the front radar device 61), and the front cowl 51 covers the front of the front radar device 61 (in other words, in the front view, the front cowl 51 overlaps the front radar device 61). Therefore, the front cowl 51 covers all of the transmission ranges of the transmission wave of the front radar device 61. As described above, the front cowl 51 is made of the material that transmits the electromagnetic wave. Paints etc. of the front cowl 51 do not contain metal powder. Therefore, the electromagnetic wave can be transmitted and received through the front cowl 51.

The front radar device 61 is covered with the front cowl 51, which can protect the front radar device 61 from water and mud, etc. The front radar device 61 is covered with the front cowl 51, which can also protect the front radar device 61 from theft, etc. Furthermore, the appearance of the motorcycle 1 can be simplified.

As shown in Fig. 5, the rear radar device 62 in the vertical direction is positioned below the taillight 46, and its position overlaps the rear frame 13. The rear radar device 62 is positioned above the rear fender 26 and the rear flap 28. In the front-back direction, although the taillight 46 is arranged rearward of the rear radar device 62, the rear radar device 62 is positioned below the taillight 46. Therefore, in the rear view, the area where the taillight 46 is projected to the rear side (the rear projection area of the taillight 46) does not overlap the rear radar device 62. Therefore, the transmission wave that is transmitted by the rear radar device 62 is not shielded by the taillight 46 (except for weak electromagnetic wave that is not used for detecting the object). Accordingly, the electromagnetic wave that is transmitted and received by the rear radar device 62 is not shielded by the taillight 46.

Although the position of the rear radar device 62 in the vertical direction overlaps the rear frame 13, the rear radar device 62 is arranged rearward of the rear frame 13. Therefore, the transmission wave that is transmitted by the rear radar device 62 is not shielded by the rear frame 13. As described above, the transmission wave that is transmitted by the rear radar device 62 has the range in the vertical direction. In this embodiment, the transmission wave does not interfere with the rear flap 28. Even when the transmission wave interferes with the rear flap 28, the rear flap 28 is made of the material that transmits the electromagnetic wave, and therefore a detection range of the objects is not reduced.

As such, the rear radar device 62 is arranged at a position avoiding the taillight 46 including the metal parts, and the rear frame 13. The rear radar device 62 is arranged inside the rear frame cover 27. Specifically, the rear frame cover 27 covers the outside of the rear radar device 62 in the left-right direction (in other words, in the side view, the rear frame cover 27 overlaps the rear radar device 62), and the rear frame cover 27 covers the rear side of the rear radar device 62 (in other words, in the rear view, the rear frame cover 27 overlaps the rear radar device 62). Therefore, the rear frame cover 27 covers all of the transmission ranges of the transmission wave of the rear radar device 62. As described above, the rear frame cover 27 is made of the material that transmits the electromagnetic wave. Paints etc. of the rear frame cover 27 does not contain metal powder. Therefore, the electromagnetic wave can be transmitted and received through the rear frame cover 27.

As described above, the motorcycle 1 of this embodiment includes the headlight 31, the taillight 46, and the radar devices (the front radar device 61, the rear radar device 62). The headlight 31 includes a part of a material that shields the electromagnetic wave. The taillight 46 includes a part of the material that shields the electromagnetic wave. The radar device transmits the transmission wave, which is the electromagnetic wave for detecting the surroundings, from the transmission/reception portion, and receives the reflected wave that is reflected by the object at the transmission/reception portion. The transmission/reception portion of the radar device is covered by the member with the material that transmits the electromagnetic wave, at least in the range where the transmission wave is transmitted. When the radar device is arranged forward of the center in the front-back direction, in the front view, the radar device is arranged outside the front projection area of the headlight 31. When the radar device is arranged rearward of the center in the front-back direction, in the rear view, the radar device is arranged outside the rear projection area of the taillight 46.

Accordingly, the radar device is covered by the member with the material that transmits the electromagnetic wave, which can protect the radar device from water and mud, etc. without degrading the function of the radar device. An influence on the transmission wave of the radar device can be prevented by a part of material that shields the electromagnetic wave of the headlight 31 and the taillight 46.

The motorcycle 1 of this embodiment includes the front radar device 61 and the front cowl 51. The front radar device 61 is a radar device for transmitting the transmission wave forward. The front cowl 51 is made of the material that transmits the electromagnetic wave. The front radar device 61 is covered with the front cowl 51.

The front radar device 61 is covered with the front cowl 51 and thereby a case for protecting the front radar device 61 is omitted. This can prevent an increase in the number of parts. Alternatively, a case for protecting the front radar device 61 is simplified, which can reduce the cost and prevent the front radar device 61 from affecting the appearance of the motorcycle 1.

In the motorcycle 1 of this embodiment, the headlight 31 includes the left headlight part 31b that is arranged on the left side and the right headlight part 31c that is arranged on the right side. In the front view, the headlight 31 has its upper part that is configured to have a large space between the left headlight part 31b and the right headlight part 31c as approaching upward. The transmission/reception portion of the front radar device 61 is arranged between the left headlight part 31b and the right headlight part 31c, or above them.

Accordingly, the space between the left headlight part 3 1b and the right headlight part 31c in the front view is effectively utilized. Thereby, the front radar device 61 can be arranged such that the transmission range of the transmission wave does not overlap the headlight 31.

In the motorcycle 1 of this embodiment, the headlight 31 is configured to such that the space between the left headlight part 31b and the right headlight part 31c increases as approaching rearward, in the plan view. The front radar device 61 is arranged between the left headlight part 3 1b and the right headlight part 31c.

Accordingly, the front radar device 61 is arranged relatively forward, which can easily achieve a layout in which the member with the material that shields the electromagnetic wave is not arranged forward of the front radar device 61.

In the motorcycle 1 of this embodiment, in the side view, the transmission/reception portion of the front radar device 61 does not overlap the headlight 31.

Accordingly, even when the front radar device 61 transmits the transmission wave that extends in the left-right direction, the transmission wave is not shielded by the headlight 31.

The motorcycle 1 of this embodiment includes the meter device 34 that displays at least the vehicle speed. In the side view, the transmission/reception portion of the front radar device 61 is arranged forward of the meter device 34.

Accordingly, the front radar device 61 is arranged in a portion where the space is relatively easily secured.

The motorcycle 1 of this embodiment includes the rear radar device 62 as a radar device that transmits the transmission wave rearward. In the rear view, the transmission/reception portion of the rear radar device 62 is arranged below the taillight 46.

Accordingly, the transmission/reception portion of the rear radar device 62 can be arranged in a portion where the space is relatively easily secured.

The motorcycle 1 of this embodiment includes the rear flap 28 that is provided below the taillight 46. The transmission/reception portion of the rear radar device 62 is arranged between the taillight 46 and the rear flap 28.

Accordingly, the rear radar device 62 and the member for covering the rear radar device 62 can be protected from water and mud, etc.

The motorcycle 1 of this embodiment includes the rear frame cover 27 that is provided with the taillight 46. The rear radar device 62 is arranged inside the rear frame cover 27.

Accordingly, the rear frame cover 27 is less likely to be vibrated as compared with the rear flap 28, etc., for example, which can prevent vibration of the rear radar device 62. The rear radar device 62 is arranged inside the rear frame cover 27, which can omit or simplify the case for protecting the rear radar device 62.

Although a preferred embodiment of the present invention has been described above, the above-described configuration can be modified, for example, as follows.
<Material that shields/transmits the electromagnetic wave> In the above-described embodiment, each of the front radar device 61 and the rear radar device 62 has a configuration in which the transmission range of the transmission wave is covered with resin (the front cowl 51 and the rear frame cover 27), and not covered with metal (the headlight 31 and the taillight 46). However, the front radar device 61 and the rear radar device 62 may be covered with the material other than resin, which transmits the electromagnetic wave. It is preferable that the front radar device 61 and the rear radar device 62 are not covered with the material other than metal, which shields the electromagnetic wave.
<Arrangement of the front radar device 61> In the above-described embodiment, although the front radar device 61 is arranged above the headlight 31, the front radar device 61 may be below the headlight 31. When the space between the front parts of the left headlight part 31b and the right headlight part 31c is large, the front radar device 61 may be arranged therebetween (that is, at the same height as the headlight 31). The front radar device 61 may be covered with another member (for example, a storage casing for storing the front radar device 61).
<Arrangement of the rear radar device 62> In the above-described embodiment, although the rear radar device 62 is mounted to the rear frame cover 27 which is the same member as the taillight 46, the rear radar device 62 may be mounted to another portion. For example, the rear radar device 62 may be mounted to the rear flap 28. The storage casing may be mounted between the rear frame cover 27 and the rear flap 28, and then the rear radar device 62 may be arranged inside the storage casing. Even in this case, preferably, the storage casing is not fixed to the rear flap 28 side, but fixed to the rear frame cover 27 side, in consideration of vibration resistance.
<Characteristics of the front radar device 61 and rear radar device 62> In the above-described embodiment, although each of the front radar device 61 and the rear radar device 62 has the range in the vertical direction and the left-right direction, the configuration having high directivity in the front-back direction may be acceptable. In this case, the front radar device 61 detects only the front of the motorcycle 1, and does not detect the left front side and right front side of the motorcycle 1 as a detection target. Likewise, the rear radar device 62 detects only the rear side of the motorcycle 1, and does not detect the left rear side and right rear side of the motorcycle 1 as the detection target.
<Applicability of the present invention> In the above-described embodiment, although an example in which a sports tourer type motorcycle is applied to the present invention is described, the present invention can be also applied to other motorcycles (an off-road type, a naked type, a cruise type, a sports type, etc.). Therefore, the motorcycle may not include the wind shield 32, for example. Either presence or absence of the front cowl 51 and the side cowl 52 may be acceptable, or the front cowl 51 and the side cowl 52 may have different shape.

### DESCRIPTION OF THE REFERENCE NUMERALS

- 1: motorcycle
- 10: body frame
- 31: headlight
- 46: taillight
- 61: front radar device (radar device)
- 62: rear radar device (radar device)

## Claims

1. A motorcycle (1) comprising:
a headlight (31) including a part of material that shields an electromagnetic wave;
a taillight (46) including a part of material that shields the electromagnetic wave; and
a rear radar device (62) that transmits a transmission wave, which is the electromagnetic wave for detecting the surroundings, rearward from a transmission/reception portion, and receives a reflected wave that is reflected by an object at the transmission/reception portion, wherein
the transmission/reception portion of the rear radar device (62) is covered by a member with the material that transmits the electromagnetic wave, at least in a range where the transmission wave is transmitted,
the rear radar device (62) for transmitting the transmission wave rearward is arranged, and in a rear view, the radar device (62) is arranged outside a rear projection area of the taillight (46),
the rear radar device (62) is arranged inside a rear frame cover (27),
the rear frame cover (27) is made of the material that transmits the electromagnetic wave,
the motorcycle (1) includes a rear frame (13),
the position of the rear radar device (62) in the vertical direction overlaps the rear frame (13),
the rear radar device (62) is arranged rearward of the rear frame (13),
in the rear view, the transmission/reception portion of the rear radar device (62) is arranged below the taillight (46), the rear radar device (62) in the vertical direction is positioned below the taillight (46), and its position overlaps the rear frame (13),
the transmission/reception portion of the rear radar device (62) is arranged forward of the taillight (46),
a rear flap (28) that is arranged below the taillight (46) is provided,
the rear radar device (62) is positioned above the rear fender (26) and the rear flap (28),
and wherein
the transmission/reception portion of the rear radar device (62) is arranged between the taillight (46) and the rear flap (28),
wherein the rear frame cover (27) covers the outside of the rear radar device (62) in the left-right direction, and the rear frame cover (27) covers the rear side of the rear radar device (62),
wherein the rear frame cover (27) covers all of the transmission ranges of the transmission wave of the rear radar device (62),
wherein the transmission wave that is transmitted by the rear radar device (62) has the range in the vertical direction,
wherein the transmission wave does not interfere with the rear flap (28) or when the transmission wave interferes with the rear flap (28), the rear flap (28) is made of the material that transmits the electromagnetic wave, and therefore a detection range of the objects is not reduced.

2. The motorcycle (1) according to claim 1, wherein
the taillight (46) is arranged in the rear frame cover (27).

3. The motorcycle (1) according to claim 1 or 2, wherein
the rear frame cover (27) is the same member as the taillight (46),
wherein
the radar device (62) is attached to the rear frame cover (27).

4. The motorcycle (1) according to any one of claims 1 to 3, wherein
the motorcycle (1) includes a front radar device (61) that transmits a transmission wave, which is the electromagnetic wave for detecting the surroundings, forward from a transmission/reception portion, and receives a reflected wave that is reflected by an object at the transmission/reception portion,
and wherein
the rear radar device (62) transmits the transmission wave that extends in the left-right direction,
wherein a front radar device (61) is arranged near the headlight (31), in a portion covered by the front cowl (51),
wherein the front radar device (61) has a range in the left-right direction, and transmits the transmission wave having a range in the vertical direction forward,
and wherein the transmission wave transmitted by the rear radar device (62) has the range in the left-right direction and the range in the vertical direction, as with the front radar device (61).

## Patentansprüche

1. Ein Motorrad (1) umfassend:
einen Scheinwerfer (31), der einen Teil aus einem Material enthält, das eine elektromagnetische Welle abschirmt;
ein Rücklicht (46), das einen Teil von Material enthält, der die elektromagnetische Welle abschirmt; und
eine Heckradarvorrichtung (62), die eine Übertragungswelle, die die elektromagnetische Welle zum Erfassen der Umgebung ist, von einem Sende-/Empfangsabschnitt nach hinten sendet und eine reflektierte Welle an dem Sende-/Empfangsabschnitt empfängt, die von einem Objekt reflektiert wird, wobei
der Sende-/Empfangsabschnitt der Heckradarvorrichtung (62) durch ein Element mit dem Material abgedeckt ist, das die elektromagnetische Welle überträgt, zumindest in einem Bereich, in dem die Übertragungswelle übertragen wird,
die Heckradarvorrichtung (62) zum Senden der Übertragungswelle nach hinten angeordnet ist, und in einer Rückansicht die Radarvorrichtung (62) außerhalb eines hinteren Projektionsbereichs des Rücklichts (46) angeordnet ist,
die Heckradarvorrichtung (62) innerhalb einer hinteren Rahmenabdeckung (27) angeordnet ist,
die hintere Rahmenabdeckung (27) aus dem Material besteht, das die elektromagnetische Welle überträgt,
das Motorrad (1) einen hinteren Rahmen (13) aufweist,
die Position der Heckradarvorrichtung (62) in vertikaler Richtung den hinteren Rahmen (13) überlappt,
die Heckradarvorrichtung (62) hinter dem hinteren Rahmen (13) angeordnet ist,
in der Rückansicht der Sende-/Empfangsbereich der Heckradarvorrichtung (62) unterhalb des Rücklichts (46) angeordnet ist, die Heckradarvorrichtung (62) in vertikaler Richtung unterhalb des Rücklichts (46) positioniert ist und ihre Position den Heckrahmen (13) überlappt,
der Sende-/Empfangsteil der Heckradaranlage (62) vor dem Rücklicht (46) angeordnet ist,
eine Heckklappe (28) vorgesehen ist, die unterhalb des Rücklichts (46) angeordnet ist,
die Heckradareinrichtung (62) oberhalb des hinteren Kotflügels (26) und der Heckklappe (28) angeordnet ist,
und wobei
der Sende-/Empfangsabschnitt der Heckradarvorrichtung (62) zwischen dem Rücklicht (46) und der Heckklappe (28) angeordnet ist,
wobei die hintere Rahmenabdeckung (27) die Außenseite der Heckradarvorrichtung (62) in der Links-Rechts-Richtung abdeckt, und die hintere Rahmenabdeckung (27) die Rückseite der Heckradarvorrichtung (62) abdeckt, wobei die hintere Rahmenabdeckung (27) alle Übertragungsbereiche der Übertragungswelle der Heckradarvorrichtung (62) abdeckt,
wobei die von der Heckradarvorrichtung (62) ausgestrahlte Übertragungswelle den Bereich in der vertikalen Richtung hat,
wobei die Übertragungswelle nicht mit der Heckklappe (28) interferiert oder, wenn die Übertragungswelle mit der Heckklappe (28) interferiert, die Heckklappe (28) aus dem Material besteht, das die elektromagnetische Welle überträgt, und daher ein Erfassungsbereich der Objekte nicht verringert wird.

2. Das Motorrad (1) nach Anspruch 1, wobei
das Rücklicht (46) in der hinteren Rahmenabdeckung (27) angeordnet ist.

3. Das Motorrad (1) nach Anspruch 1 oder 2, wobei
die hintere Rahmenabdeckung (27) das gleiche Element wie das Rücklicht (46) ist,
wobei
die Radarvorrichtung (62) an der hinteren Rahmenabdeckung (27) angebracht ist.

4. Das Motorrad (1) nach einem der Ansprüche 1-3, wobei
das Motorrad (1) eine Frontradarvorrichtung (61) enthält, die eine Übertragungswelle, die die elektromagnetische Welle zur Erfassung der Umgebung ist, von einem Sende-/Empfangsabschnitt nach vorne sendet und eine reflektierte Welle an dem Sende-/Empfangsabschnitt empfängt, die von einem Objekt reflektiert wird,
und wobei
die Heckradareinrichtung (62) die Übertragungswelle sendet, die sich in der Links-Rechts-Richtung erstreckt,
wobei eine Frontradareinrichtung (61) in der Nähe des Scheinwerfers (31) in einem von der Frontverkleidung (51) abgedeckten Bereich angeordnet ist,
wobei die Frontradarvorrichtung (61) einen Bereich in der Links-Rechts-Richtung hat und die Übertragungswelle mit einem Bereich in der vertikalen Richtung nach vorne sendet,
und wobei die von der Heckradarvorrichtung (62) gesendete Übertragungswelle den Bereich in der Links-Rechts-Richtung und den Bereich in der vertikalen Richtung wie bei der Frontradareinrichtung (61) hat.

## Revendications

1. Motocyclette (1) comprenant:
un phare (31) comprenant une partie de matériau qui protège d'une onde électromagnétique;
un feu arrière (46) comprenant une partie de matériau qui protège l'onde électromagnétique; et
un dispositif radar arrière (62) qui émet une onde de transmission, qui est l'onde électromagnétique pour détecter l'environnement, vers l'arrière à partir d'une partie d'émission/réception, et reçoit une onde à la partie d'émission/réception réfléchie qui est réfléchie par un objet, dans lequel
la partie d'émission/réception du dispositif radar arrière (62) est recouverte d'un élément avec le matériau transmet l'onde électromagnétique, au moins dans une zone où l'onde de transmission est transmette,
le dispositif radar arrière (62) pour la transmission de l'onde de transmission vers l'arrière est disposé, et dans une vue arrière, le dispositif radar (62) est disposé à l'extérieur d'une zone de projection arrière du feu arrière (46),
le dispositif radar arrière (62) est placé à l'intérieur d'un couvercle de cadre arrière (27),
le couvercle du cadre arrière (27) est fait d'un matériau qui transmet l'onde électromagnétique,
la motocyclette (1) comprend un cadre arrière (13),
la position du dispositif radar arrière (62) dans la direction verticale chevauche le cadre arrière (13),
le dispositif radar arrière (62) est disposé à l'arrière du cadre arrière (13),
en vue arrière, la partie d'émission/réception du dispositif radar arrière (62) est disposée sous le feu arrière (46), le radar arrière (62) est placé dans la direction verticale sous le feu arrière (46) et sa position chevauche le cadre arrière (13),
la partie d'émission/réception du dispositif radar arrière (62) est disposée à l'avant du feu arrière (46),
un volet arrière (28) disposé sous le feu arrière (46) est prévu,
le dispositif radar arrière (62) est placé au-dessus de l'aile arrière (26) et du volet arrière (28),
et dans lequel
la partie d'émission/réception du dispositif radar arrière (62) est disposée entre le feu arrière (46) et le volet arrière (28),
dans lequel le couvercle du cadre arrière (27) couvre l'extérieur du dispositif radar arrière (62) dans la direction gauche-droite, et le couvercle du cadre arrière (27) couvre le côté arrière du dispositif radar arrière (62), dans lequel le couvercle du cadre arrière (27) couvre toutes les zone d'émission de l'onde d'émission du dispositif radar arrière (62),
dans lequel l'onde de transmission émise par le dispositif radar arrière (62) a la zone en direction verticale,
dans lequel l'onde de transmission n'interfère pas avec le volet arrière (28) ou lorsque l'onde de transmission interfère avec le volet arrière (28), le volet arrière (28) est constitué d'un matériau qui transmet l'onde électromagnétique et, par conséquent, la zone de détection des objets n'est pas réduite.

2. La motocyclette (1) selon la revendication 1, dans laquelle
le feu arrière (46) est placé dans le couvercle du cadre arrière (27).

3. La motocyclette (1) selon la revendication 1 ou 2, dans laquelle
le couvercle du cadre arrière (27) est du même type que le feu arrière (46),
dans lequel
le dispositif radar (62) est fixé au couvercle du cadre arrière (27).

4. La motocyclette (1) selon l'une des revendications 1 à 3, dans laquelle
la motocyclette (1) comprend un dispositif radar avant (61) qui transmet une onde de transmission, qui est l'onde électromagnétique permettant de détecter l'environnement, vers l'avant à partir d'une partie d'émission/réception, et reçoit à la partie d'émission/réception une onde réfléchie qui est réfléchie par un objet,
et dans lequel
le dispositif radar arrière (62) transmet l'onde de transmission qui s'étend dans la direction gauche-droite,
un dispositif radar avant (61) est placé près du phare (31), dans une partie couverte par le capot avant (51),
dans lequel le dispositif radar avant (61) a une zone dans la direction gauche-droite, et transmet l'onde de transmission ayant une zone dans la direction verticale vers l'avant,
et dans lequel l'onde de transmission transmise par le dispositif radar arrière (62) a la zone dans la direction gauche-droite et la zone dans la direction verticale qu'avec le dispositif radar avant (61).
